# EUROPEAN PATENT APPLICATION

(11) **EP 2 728 506 A1**
(43) Date of publication of application: **07.05.2014**
(21) Application number: 13191219.8
(22) Date of filing: 31.10.2013
(51) Int. Cl.: G06F 21/33, G06F 9/44, G06F 21/41

(54) **Apparatus & method for facilitating container-based management**

(30) Priority: 31.10.2012 US 201261720761 P
(71) Applicant: UBS AG, 8000 Zürich (CH)
(72) Inventor: Pizi, Anthony, Princeton, NJ 08540 (US); Milshtein, Yuri, Edison, NJ 08820 (US); Kanevsky, Paul, West Windsor, NJ 08550 (US); Melikov, Andrey, Fair Lawn, NJ 07410 (US)
(74) Representative: Beck Greener

(57) **Abstract**

An approach for facilitating container-based management at a user device is disclosed. In some embodiments, a request to establish a session between the user device (102a,... 102n) and a network service may be provided to the network service (110a,... 110k). One or more session keys associated with the session and associated with a container (108a,... 108n) at the user device may be obtained from the network service responsive to the session request. Storage, access, or a combination thereof of data at the user device may be effectuated, via the container at the user device, based on the session keys.

## Description

The present invention relates to an apparatus and method for facilitating container-based management.

In embodiments, the present disclosure relates to facilitating container-based management at a user device, for instance, using a container at the user device to effectuate storage and/or access of data at the user device based on one or more session keys.

In recent years, numerous types of user devices have made their way into the mainstream consumer market. These user device types may, for instance, include a plethora of different form factors, operating systems, versions, hardware/software capabilities, etc. However, traditional application used by many organizations (e.g., banks, brokerages, retailers, and/or other organizations) may not be optimized for many of the various user device types, which may reduce the effectiveness and efficiency of those applications to users of those user device types.

Moreover, many applications utilized by users (e.g., customers, employees, etc.) may not be able to interact with each other, for instance, to share information in real-time to provide users with a more user-friendly environment (e.g., as a result of the applications being of dissimilar application types). In addition, while many organizations (e.g., banks, brokerages, retailers, and/or other organizations) can obtain a competitive advantage by making their services and data available to their customers, employees, etc., via as many channels as possible, the number of feasible channels may be limited by their obligation to maintain and protect the confidentiality of certain information, such as customer information, employee information, confidential corporate information, etc. For example, allowing employees to use their own personal devices for work may increase company morale and work productivity. Nevertheless, before approving use of any personal device, organizations must still ensure that the device is equipped with support for mechanisms that can maintain and protect confidentiality of information on the device, for instance, in spite of loss or theft of the device.

According to a first aspect of the present invention, there is provided a method for facilitating container-based management at a user device, the method comprising: providing a request to a network service to establish a session between the user device and the network service; obtaining, from the network service, one or more session keys associated with the session and associated with a container at the user device responsive to the session request; and effectuating, via the container at the user device, storage, access, or a combination thereof of data at the user device based on the session keys.

According to a second aspect of the present invention, there is provided an apparatus for facilitating container-based management at a user device, the apparatus comprising: at least one processor; and at least one memory that includes computer program code for one or more programs, the at least one memory and the computer program code configured to, with the at least one processor, cause the apparatus to perform at least the following:
provide a request to a network service to establish a session between the user device and the network service; obtain, from the network service, one or more session keys associated with the session and associated with a container at the user device responsive to the session request; and
effectuate, via the container at the user device, storage, access, or a combination thereof of data at the user device using the session keys.

According to a third aspect of the present invention, there is provided a method for facilitating container-based management at a user device, the method comprising:
obtaining a request from the user device to establish a session between the user device and a network service; and
providing, to the user device, one or more session keys associated with the session and associated with a container at the user device responsive to the session request, wherein the container is configured to effectuate storage, access, or a combination thereof of data at the user device based on the session keys.

One aspect of the disclosure relates to methods, apparatuses, and/or systems for facilitating container-based management at a user device, for instance, using a container at the user device to effectuate storage and/or access of data at the user device based on one or more session keys.

By way of example, in one embodiment, a method may comprise providing a request to a network service to establish a session between the user device and the network service. The method may also comprise obtaining, from the network service, one or more session keys associated with the session and associated with a container at the user device responsive to the session request. The method may further comprise effectuating, via the container at the user device, storage, access, or a combination thereof of data at the user device based on the session keys.

According to another embodiment, an apparatus may comprise at least one processor; and at least one memory that includes computer program code for one or more programs, the at least one memory and the computer program code configured to, with the at least one processor, cause the apparatus to provide a request to a network service to establish a session between the user device and the network service. The apparatus may also be caused to obtain, from the network service, one or more session keys associated with the session and associated with a container at the user device responsive to the session request. The apparatus may further be caused to effectuate, via the container at the user device, storage, access, or a combination thereof of data at the user device using the session keys.

According to another embodiment, a method may comprise obtaining a request from the user device to establish a session between the user device and a network service. The method may also comprise providing, to the user device, one or more session keys associated with the session and associated with a container at the user device responsive to the session request, wherein the container may be configured to effectuate storage, access, or a combination thereof of data at the user device based on the session keys.

According to another embodiment, an apparatus may comprise at least one processor; and at least one memory that includes computer program code for one or more programs, the at least one memory and the computer program code configured to, with the at least one processor, cause the apparatus to obtain a request from the user device to establish a session between the user device and a network service. The apparatus may also be caused to provide, to the user device, one or more session keys associated with the session and associated with a container at the user device responsive to the session request, wherein the container may be configured to effectuate storage, access, or a combination thereof of data at the user device based on the session keys.

In various embodiments, the methods can be accomplished on the service provider side, on the user device side, and/or in any shared way between the service provider and the user device with actions being performed on both sides. In other embodiments, the apparatuses and/or the systems may include one or more components on the server provider side and/or on the user device side.

Other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

Embodiments of the present invention will now be described in detail with reference to the accompanying drawings, in which:
FIG. 1 is a diagram of a system capable of facilitating container-based management at a user device, in accordance with one or more embodiments;
FIG. 2 is a diagram of the components of a container-based management platform, in accordance with one or more embodiments;
FIG. 3 is a flowchart of a process for facilitating container-based management at a user device based on session keys obtained from a network service, in accordance with one or more embodiments;
FIG. 4 is a flowchart of a process for facilitating presentation of a projection of a refactored user interface of a remote application, in accordance with one or more embodiments;
FIG. 5 is a flowchart of a process for effectuating, via a container at a user device, communication between a local application and a remote application based on context information and/or event information, in accordance with one or more embodiments;
FIG. 6 is a flowchart of a process for facilitating container-based management at a user device based on session keys provided to the user device, in accordance with one or more embodiments;
FIG. 7 is a flowchart of a process for providing a projection of a refactored user interface of a remote application to a user device, in accordance with one or more embodiments;
FIG. 8 is a diagram of various types of user devices at which container-based management may be implemented, in accordance with one or more embodiments;
FIG. 9 is a diagram of additional components of a system for facilitating container-based management at a user device, in accordance with one or more embodiments;
FIG. 10 is a diagram of a user device having a container for facilitating container-based management at the user device, in accordance with one or more embodiments;
FIGS. 11 A and 11B are diagrams of a GUI implemented based on container-based management, in accordance with one or more embodiments;
FIGS. 12A and 12B are diagrams illustrating refactoring of user interfaces at a network service and projection of the refactored user interfaces at a user device, in accordance with one or more embodiments;
FIGS. 13A and 13B are diagrams illustrating container applications, in accordance with one or more embodiments; and
FIGS. 14A and 14B illustrate another diagram of components of a system for facilitating container-based management at a user device, in accordance with one or more embodiments.

Examples for facilitating container-based management at a user device are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

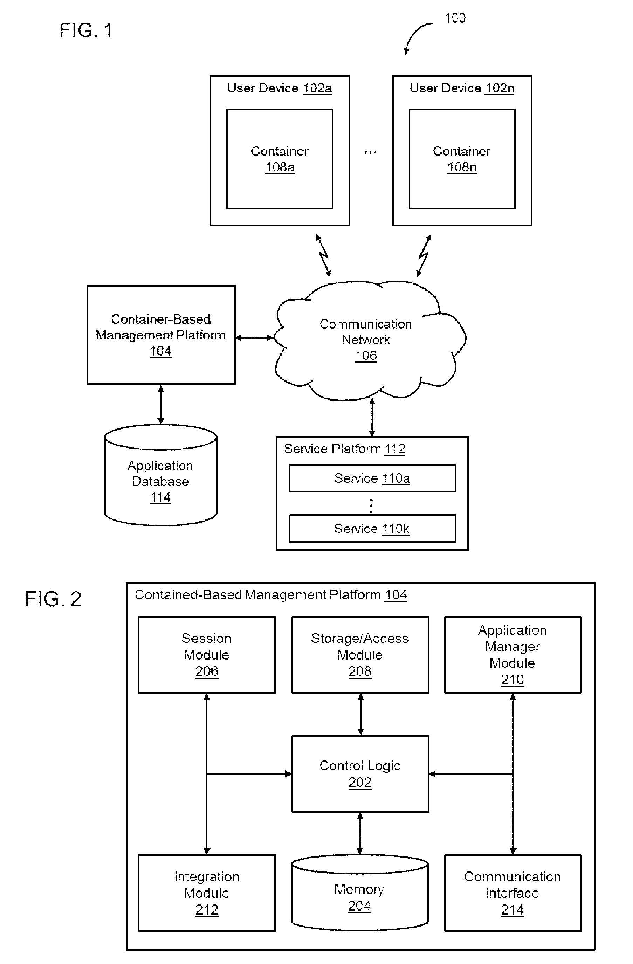

FIG. 1 is a diagram of a system capable of facilitating container-based management at a user device, in accordance with one or more embodiments. As discussed, in addition to issues with non-suitable user interfaces and inability of applications of dissimilar types to share information, organizations many struggle with offering their services and information via a large number of user device types since these organizations must also ensure that confidentiality of information remain protected from unauthorized personal/programs. For example, while it may be advantageous in some ways to allow employees to utilize personal devices for work, employers cannot restrict many of the operations of the personal devices that increase the risk of security breaches (e.g., installation of new applications, unrestricted transmission of data outside the personal device, etc.) without taking away freedoms associated with personal devices. Thus, employers may rely on traditional approaches to securing data. Such traditional approaches focus on protecting a secure data area (e.g., the core network) by reinforcing its perimeters using firewalls, and allowing communication links of user devices cross the perimeter after authenticating the users' identity. In this type of approach, the link between a user's device and the boundary of the fenced-in area is secured using encryption (e.g., secure HTTP). However, this approach raises a number of issues.

For example, with respect to data security, perimeter protection does not protect the data that has been placed on the user's device. Once the data is on the device, it may not be safe. A rogue program on the user's device may, for instance, transmit the data to an unauthorized third party, even without the user's knowledge (e.g., unauthorized transmission by a virus, malware, etc.). Moreover, local caching may result in data being saved in an unprotected cache even in cases where the application itself is considered safe. A user can also forward the saved data to third parties or save the data to unprotected environments (e.g., while synchronizing the user device with another device), resulting in security breaches.

With respect to system security, programs running on the user's device may use standardized protocols that require firewall ports to be opened to allow connectivity between a user's device and an application server. This creates weak points through which an attacker can penetrate the firewall and gain access to protected systems. Once a penetration succeeds, an attacker can likely access multiple systems in the same security zone. In addition, an attacker may be able to install Trojan horses and backdoor programs to gain arbitrary access to multiple systems.

With respect to user device configuration issues, programs accessing protected data may malfunction due to version or configuration incompatibilities. Such malfunctions typically reflect poorly on the data provider (e.g., a bank). For this reason, the data provider (e.g., the bank) will be pressured to provide support in cases of such incidents, eventually troubleshooting unknown, third party programs through its support mechanisms and call centers, which may be very expensive. In addition, user may become frustrated with having to make such support calls.

To address the above issues, the system 100 may facilitate container-based management at a user device. By way of example, in various embodiments, the system 100 may facilitate the use of session keys to store and/or access data at a user device during a particular session for applications of a container of the user device, and delete the session keys from the user device upon termination of the session. The system 100 may provide users with projections of remote applications to the user device and integrate the projections with local applications (or device-native applications) such that the remote and local applications may co-exist in the same container view of an overall user interface presented to the user (e.g., the applications may be presented in the same way, navigated to using the same navigation mechanism, etc.). In this way, the system 100 may make it transparent to the user as to whether the applications are local or remote to the device, since the look-and-feel, the interactions, etc., that the user experiences may not be negatively affected based on whether the applications are local or remote.

As shown in FIG. 1, the system 100 may include a user device 102 (or multiple user devices 102a-102n) having connectivity to a container-based management platform 104 via a communication network 106. The user device 102 may include or have access to a container 108 (e.g., containers 108a-108n) to enable the user device 102 to interact with, for instance, the container-based management platform 104, which may: (1) enable applications associated with the user device 102 to locally store and/or access data at the user device 102 during a session using session keys associated with the session and the container 108; (2) provide presentation of a projection of user interfaces of remote applications where the user interfaces are refactored for presentation on the user device 102 based on device information associated with the user device 102; (3) facilitate seamless interaction among various types of applications associated with the user device 102 using context information and/or event information associated with the applications; (4) enable local and remote applications to co-exist within the same container view of a user interface (e.g., presented in the same way, navigated to using the same navigation mechanism, etc.); (5) and/or perform other functions. It is noted that the container-based management platform 104 (or various components of the platform 104) may be a separate entity of the system 100, a part of one or more services 110 of the service platform 112, and/or included within the user device 102 (e.g., as part of container 108). As such, in some embodiments, the components of the container-based management platform 104 may be executed as one or more components of the separate entity, the one or more services 110, and/or the user device 102.

In one embodiment, a user device 102 (e.g., using the container-based management platform 104) may provide a request to a network service 110 to establish a session between the user device 102 and the network service 110. In response to the session request, the user device 102 may obtain (e.g., from the network service) one or more session keys associated with the session and associated with a container 108 at the user device 102. Storage, access, or a combination thereof of data at the user device may then be effectuated via the container at the user device based on the session keys.

By way of example, the container 108 may be a device-specific/native application running on the user device 102. The container 108 may be associated with one or more local applications operating on the user device 102, one or more remote applications operating on a virtual desktop instance (VDI) of the network service 110, etc. A local application may be a device-specific/native application running on the user device 102. A remote application may be an application running on a VDI implemented on one or more servers associated with the network service 110. A VDI may, for instance, be logically thought of as a user-dedicated computer that is similar to a desktop except that the VDI may be a virtual machine running on a VDI farm. A local or remote application associated with the container 108 may operate within the container 108 such that the application may operate within the boundaries and the rules of the container 108. For example, in some scenarios, when a local application associated with the container 108 needs to store data at the user device 102, the local application may store the data in a virtual memory area assigned to the container 108 using sessions keys obtained through a process specified for local applications operating within the container 108.

In another embodiment, the local applications, the remote applications, or a combination thereof may be configured to effectuate storage, access, or a combination thereof the data at the user device 102 via the container 108 using the session keys. In one scenario, when a user activates one of the local applications on the user device 102, the container 108 may interact with the network service 110 to establish a session with a VDI of the network service 110. In response, the network service 110 may generate, and provide to the container 108, a session key for use during the session for storage and access of data at the user device 102. For example, if the local application is a web browser operating within the container 108, the container 108 may facilitate the browser's caching of web data by encrypting the data using the session key prior to the data being cached in a memory of the user device 102. Whenever the browser needs to access the data from the cache, the browser may interact with the container 108 to decrypt the cached data (in its encrypted form) using the session key. Once the session is discontinued, however, the session key is removed from the user device 102 and, thus, any data remaining in the cache may be useless, since such data can longer be decrypted. In some embodiments, the session key may be stored in volatile memory such that the session key will be automatically removed, for instance, when the user device 102 is turned off.

In another embodiment, a network service 110 (e.g., using the container-based management platform 104) may obtain a request from a user device 102 to establish a session between the user device 102 and the network service 110. In response to the session request, the network service 110 may provide (e.g., to the user device) one or more session keys associated with the session and associated with a container 108 at the user device 102. As indicated, the container 108 may be configured to effectuate storage, access, or a combination thereof of data at the user device 102 based on the session keys. As such, the network service 110 may work with the user device 102 to facilitate container-based management at the user device 102.

In various embodiments, the container-based management platform 104 may include or have access to an application database 114 to access or store application information. The application information may, for instance, include information indicating local applications implemented on the user device 102 and operating within the container 108, information specifying remote applications at the network service 110 that may be accessible to the user device 102 via the container 108, information indicating active local and remote applications associated with one or more sessions, and/or other application-related information.

By way of example, the communication network 106 of system 100 may include one or more networks such as a data network, a wireless network, a telephony network, and/or any other communication network. It is contemplated that the data network may be any local area network (LAN), metropolitan area network (MAN), wide area network (WAN), a public data network (e.g., the Internet), short range wireless network, and/or any other suitable packet-switched network. The wireless network may, for example, be a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium (e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth, Internet Protocol (IP) data casting, satellite, mobile ad-hoc network (MANET), etc.).

The user device 102 may be any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, and/or any other user device. In some embodiments, the user device 102 may be the accessories and peripherals of these devices. It is also contemplated that the user device 102 may support any type of interface to the user (such as "wearable" circuitry, etc.).

In another embodiment, the container-based management platform 104 may provide a request to the network service 110 to initiate at least one of the remote applications. The container-based management platform 104 may obtain a projection (e.g., a video stream, an image stream, etc.) of a refactored user interface. The user interface may be refactored at the network service (e.g., at the VDI on which the remote application is initiated) based on device information associated with the device. The container-based management platform 104 may then effectuate presentation of the projection via the container.

In one scenario, during the initial setup of a connectivity session between the user device 102 and a VDI of the network service 110, the VDI may provide configuration information to the user device 102, and obtained device information associated with the user device 102. Subsequently, a user may utilize a user device 102 to initiate a remote email application operating on the VDI at the network service 110. In response, the VDI may utilize the device information of the user device 102 to generate a refactored user interface of the remote application. For example, if the device information indicates that the form factor of the user device 102 is a mobile phone with a small screen size and a resolution of 1280 x 720 pixels, the user interface of the remote application may be refactored to look presentable on the small screen of the mobile phone despite the fact that the default user interface may have easily fit within the 1280 x 720 pixel resolution. The VDI may provide a video stream of the refactored user interface to the user device 102, and the video stream may be presented to the user via the container 108. Interactions of the user (e.g., clicking, tapping, typing, gestures, and/or other user inputs) with the projected video stream may be captured by the container 108 and relayed from the user device 102 to the VDI.

In this way, the projection approach via the container 108 may make information rendered at the user device 102 more difficult to intercept by a rogue application (e.g., virus, malware, etc.) since the information may exist on the user device 102 only as pixels. Moreover, the projection approach may be quite resilient to perimeter attacks, as only a single port needs to be opened for all types of applications, and a single, well-defined, understood and secure protocol may be used over that port. It is also easier to accommodate new user device types since only a new container 108 for each of the new user device types may be needed, and the applications may not need to be adjusted for each of the new user device types.

In another embodiment, the container-based management platform 104 may effectuate communication between the local applications, the remote applications, or a combination thereof via the container 108. By way of example, the container 108 may enable two unrelated applications to be integrated without any changes to the source code of those applications, by providing context and event sharing capabilities (e.g., via the container-based management platform 104). Thus, two unrelated applications can appear to cooperate, resulting in a composite application that is easier to user. In one use case, a user may be looking up a particular customer's data using a customer relationship management (CRM) application. The container 108 (e.g., via the container-based management platform 104) may utilize the customer's data obtained from the CRM application for a checking account application to navigate a checking account system, saving the user the time and effort from manually inputting the customer's data into the checking account application. Accordingly, the container 108 in conjunction with the container-based management platform 104 makes the CRM and checking account applications appear to cooperate, providing the user with a friendlier experience.

In another embodiment, the container-based management platform 104 may obtain a first set of context information, event information, or a combination thereof associated with at least one of the local applications via the container. The container-based management platform 104 may obtain a second set of context information, event information, or a combination thereof associated with at least one of the remote applications via the container. The container-based management platform 104 may effectuate communication between the at least one local application and the at least one remote application based on the first set, the second set, or a combination thereof. For example, context information associated with an application may indicate hardware capabilities (e.g., GPS, camera, microphone, keyboard, etc.), network resources (e.g., network connection, bandwidth, storage, etc.), available information (e.g., contact information, location information, etc. of users, customers, etc.), and/or other resources that are accessible to the application. Event information associated with an application may indicate notifications of user interaction with the application, alerts with respect to information requested by the application, and/or other event triggers. The communication may, for instance, be performed according to one or more application programmable interfaces (APIs) associated with the container 108 (and/or the container-based management platform 104).

In one use case, with respect to the CRM and checking application scenario, the CRM application may be a local application operating within the container 108 of the user device 102 (e.g., the CRM application may be a container application), and the checking account application may be a remote application operating on a VDI at the network service 110 (e.g., the checking account application may be a projected application). Based on the context information associated with the CRM application, the container 108 (and/or the container-based management platform 104) may know that the CRM application at the user device 102 has access to particular customer data, such as user identifier, bank account number, etc. In addition, based on the event information associated with the checking account application, the container 108 (and/or the container-based management platform 104) may know that the checking account application requires user identifiers, bank account numbers, etc., to look up the checking accounts of customers. As such, when the user access the CRM application to look up a certain customer's data that includes the customer's user identifier and bank account number, the container 108 (and/or the container-based management platform 104) may work with the CRM application to provide the user identifier and the bank account number to the checking account application (e.g., since it is known through the event information that the checking account application requires such information to access the checking account of a customer). In this way, as discussed, two unrelated applications can appear to cooperate, resulting in a composite application that is easier for the user, for instance, by saving the user the time and effort from manually inputting the customer's data into the checking account application.

FIG. 2 is a diagram of the components of a container-based management platform, in accordance with one or more embodiments. By way of example, the container-based management platform 104 may include one or more components for facilitating container-based management at a user device. It is contemplated that the functions of these components may be combined in one or more components or performed by other components of equivalent functionality. In one embodiment, the container-based management platform 104 may include control logic 202, memory 204, a session module 206, a storage/access module 208, an application manager module 210, an integration module 212, a communication interface 214, and/or other modules.

As noted, the container-based management platform 104 (or various components of the platform 104) may be a separate entity of the system 100, a part of the one or more services 110 of the service platform 112, and/or included within the user device 102 (e.g., as part of container 108). As such, in some embodiments, the components of the container-based management platform 104 may be executed as one or more components of the separate entity, the one or more services 110, and/or the user device 102.

The control logic 202 may execute at least one algorithm for executing functions of the container-based management platform 104. For example, in certain embodiments, the control logic 202 may interact with the session module 206 to provide a request to a network service 110 to establish a session between the user device 102 and the network service 110. In response to the session request, the session module 206 may obtain, from the network service 110, one or more session keys associated with the session and associated with a container 108 at the user device 102. As discussed, the container 108 may be a device-specific/native application running on the user device 102. The container 108 may be associated with one or more local applications operating on the user device 102, one or more remote applications operating on a VDI of the network service 110, etc. A local application may be a device-specific/native application running on the user device 102. A remote application may be an application running on a VDI implemented on one or more servers associated with the network service 110.

In various embodiments, the control logic 202 may work with the storage/access module 208 to effectuate, via the container, storage and/or access of data at the user device 102 based on the session keys. By way of example, the storage/access module 208 may effectuate encryption of the data to be stored at the user device responsive to initiation of the storage of the data such that the stored data is encrypted using the session keys. To effectuate access of the stored data, the storage/access module may effectuate decryption of the encrypted data stored at the user device using the session keys responsive to initiation of the access of the stored data. In one scenario, since the session keys (e.g., obtained in response to the session request) are associated with the session and the container, the session keys may only be valid and/or accessible for use during that session for applications operating within that container.

In some embodiments, for instance, the control logic 202 may direct the session module 206 to effectuate deletion of the session keys responsive to discontinuation of the session. For example, during an active session, the session keys may be stored in a memory cache so that the container 108 may facilitate storage and access of data at the user device (e.g., for applications operating within the container 108) using the session keys. However, upon determining that the session has been terminated, the container 108 may delete the session keys from the memory cache such that any encrypted data (e.g., encrypted using the session keys) remaining on the user device 102 after the termination of the session may no longer be decrypted. In this way, even if the user device 102 is lost, stolen, and/or accessed by unauthorized personal/programs, any session-key-encrypted data remaining on the user device after the session will be useless to any unauthorized personnel/program since the data can no longer be decrypted.

In additional embodiments, the control logic 202 may utilize the application manager module 210 to provide a request to the network service 110 to initiate at least one of the remote applications (e.g., operating on a virtual desktop instance of the network service 110). In response to the initiation request, the control logic 202 may work with the integration module 212 to obtain a projection of a refactored user interface. As indicated, the user interface may be refactored at the network service based on device information associated with the device. The integration module 212 may then effectuate presentation of the projection via the container for a user of the user device 102. The projection may, for instance, include a video stream and/or an image stream of the refactored user interface. As indicated, the projection approach may make information rendered at the user device 102 more difficult to intercept by a rogue application (e.g., virus, malware, etc.) since the information may exist on the user device 102 only as pixels. The projection approach may also be quite resilient to perimeter attacks, as only a single port needs to be opened for all types of applications, and a single, well-defined, understood and secure protocol may be used over that port. The approach also facilitates accommodation of new user device types since only a new container 108 for each of the new user device types may be needed, and the applications may not need to be adjusted for each of the new user device types.

In certain embodiments, the control logic 202 may interact with the integration module 212 to obtain a first set of context information, event information, or a combination thereof associated with at least one of the local applications via the container. The integration module 212 may obtain a second set of context information, event information, or a combination thereof associated with at least one of the remote applications via the container. The integration module 212 may then effectuate communication between the at least one local application and the at least one remote application based on the first set, the second set, or a combination thereof. As indicated, context information associated with an application may indicate hardware capabilities (e.g., GPS, camera, microphone, keyboard, etc.), network resources (e.g., network connection, bandwidth, storage, etc.), available information (e.g., contact information, location information, etc. of users, customers, etc.), and/or other resources that are accessible to the application. Event information associated with an application may indicate notifications of user interaction with the application, alerts with respect to information requested by the application, and/or other event triggers. The communication may, for instance, be performed according to one or more APIs associated with the container 108 (and/or the integration module 212). As discussed, the integration module 212 (e.g., in conjunction with the container 108) may utilize context and event information of applications to provide one or more applications with information and/or other resources by working with other applications that have access to the information and/or the other resources. In this way, two unrelated applications can appear to cooperate, resulting in a composite application that is easier for the user.

The control logic 202 may utilize the communication interface 214 to communicate with other components of the container-based management platform 104, the user devices 102, the service platform 112, the services 110, and/or other components of the system 100. For example, the session module 206 may utilize the communication interface 214 to transmit the session request to the network service. The communication interface 214 may include multiple means of communication. In one use case, the communication interface 214 may be able to communicate over one or more internet protocols, emails, instant messaging, voice sessions (e.g., via a phone network), and/or other types of communication.

As noted, in some embodiments, the container-based management platform 104 may be implemented at one or more servers at the network service 110. As such, the control logic 202 may work with the session module 206 to obtain a request from the user device 102 to establish a session between the user device 102 and the network service 110. In response to the session request, the session module 206 may provide (e.g., to the user device) one or more session keys associated with the session and associated with a container 108 at the user device 102. The container 108 may, for instance, be configured to effectuate storage, access, or a combination thereof of data at the user device 102 based on the session keys.

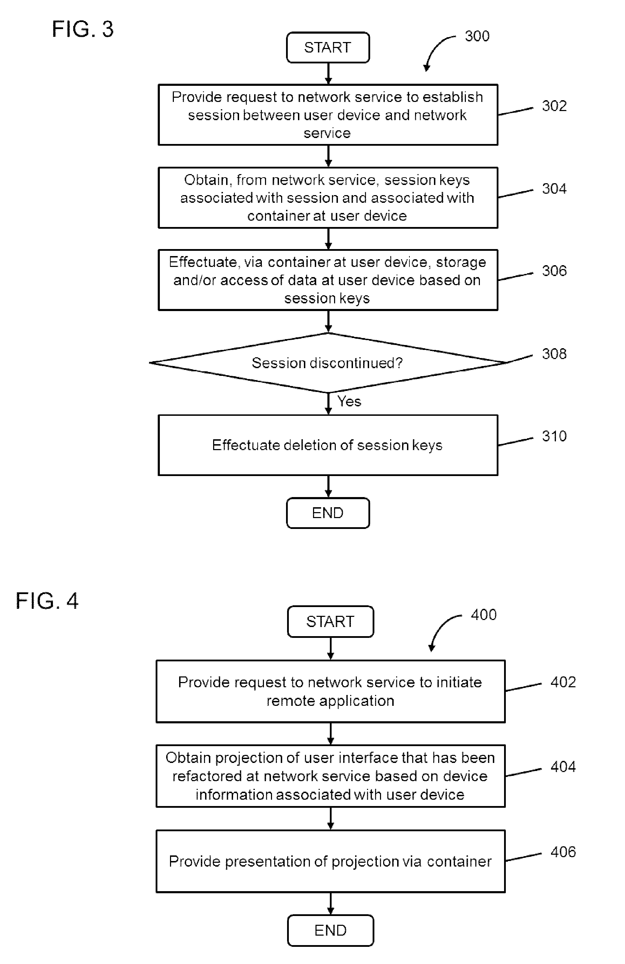

FIG. 3 is a flowchart of a process for facilitating container-based management at a user device based on session keys obtained from a network service, in accordance with one or more embodiments. The operations of process 300 presented below are intended to be illustrative. In some embodiments, process 300 may be accomplished with one or more additional operations not described, and/or without one or more of the operations discussed. Additionally, the order in which the operations of process 300 are illustrated in FIG. 3 and described below is not intended to be limiting.

At operation 302, a request may be provided to a network service 110 to establish a session between the user device 102 and the network service 110. Operation 302 may be performed by a session module that is the same as or similar to session module 206, in accordance with one or more implementations.

At operation 304, one or more session keys associated with the session and associated with a container 108 at the user device 102 may be obtained responsive to the session request. Operation 304 may be performed by a session module that is the same as or similar to session module 206, in accordance with one or more implementations.

At operation 306, storage and/or access of data at the user device 102 may be effectuated, via the container 108 at the user device 102, based on the session keys. Operation 306 may be performed by a storage/access module that is the same as or similar to storage/access module 208, in accordance with one or more implementations.

At operation 308, a determination of whether the session has been discontinued may be effectuated. Operation 308 may be performed by a session module that is the same as or similar to session module 206, in accordance with one or more implementations. Responsive to a determination that the session has been discontinued, process 300 may proceed to operation 310.

At operation 310, deletion of the session keys may be effectuated. Operation 310 may be performed by a session module that is the same as or similar to session module 206, in accordance with one or more implementations.

FIG. 4 is a flowchart of a process for facilitating presentation of a projection of a refactored user interface of a remote application, in accordance with one or more embodiments. The operations of process 400 presented below are intended to be illustrative. In some embodiments, process 400 may be accomplished with one or more additional operations not described, and/or without one or more of the operations discussed. Additionally, the order in which the operations of process 400 are illustrated in FIG. 4 and described below is not intended to be limiting.

At operation 402, a request may be provided to the network service 110 to initiate at least one of the remote applications (e.g., operating on a VDI of the network service 110). Operation 402 may be performed by an application manager module that is the same as or similar to application manager module 210, in accordance with one or more implementations.

At operation 404, a projection of a refactored user interface associated with the at least one remote application may be obtained. The user interface may be refactored at the network service 110 based on device information associated with the user device 102. Operation 404 may be performed by an integration module that is the same as or similar to integration module 212, in accordance with one or more implementations.

At operation 406, presentation of the projection may be provided via the container. Operation 406 may be performed by an integration module that is the same as or similar to integration module 212, in accordance with one or more implementations.

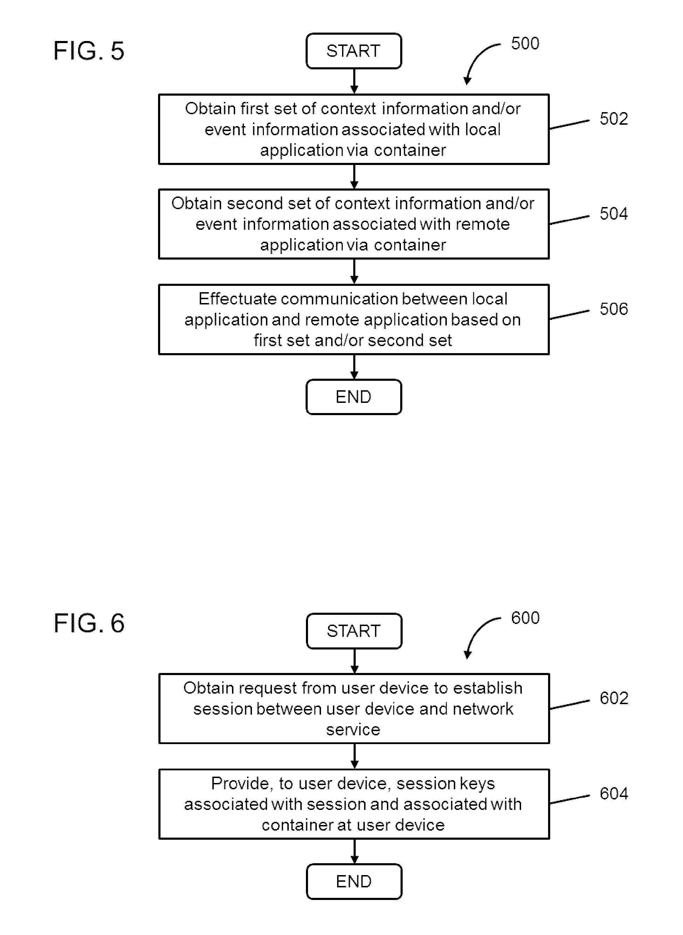

FIG. 5 is a flowchart of a process for effectuating, via a container at a user device, communication between a local application and a remote application based on context information and/or event information, in accordance with one or more embodiments. The operations of process 500 presented below are intended to be illustrative. In some embodiments, process 500 may be accomplished with one or more additional operations not described, and/or without one or more of the operations discussed. Additionally, the order in which the operations of process 500 are illustrated in FIG. 5 and described below is not intended to be limiting.

At operation 502, a first set of context information, event information, or a combination thereof associated with at least one of the local applications may be obtained via the container. As noted, context information associated with an application may indicate hardware capabilities, network resources, available information, and/or other resources that are accessible to the application. Event information associated with an application may indicate notifications of user interaction with the application, alerts with respect to information requested by the application, and/or other event triggers. Operation 502 may be performed by an integration module that is the same as or similar to integration module 212, in accordance with one or more implementations.

At operation 504, a second set of context information, event information, or a combination thereof associated with at least one of the remote applications may be obtained via the container. Operation 504 may be performed by an integration module that is the same as or similar to integration module 212, in accordance with one or more implementations.

At operation 506, communication between the at least one local application and the at least one remote application may be effectuated based on the first set, the second set, or a combination thereof. Operation 506 may be performed by an integration module that is the same as or similar to integration module 212, in accordance with one or more implementations.

FIG. 6 is a flowchart of a process for facilitating container-based management at a user device based on session keys provided to the user device, in accordance with one or more embodiments. The operations of process 600 presented below are intended to be illustrative. In some embodiments, process 600 may be accomplished with one or more additional operations not described, and/or without one or more of the operations discussed. Additionally, the order in which the operations of process 600 are illustrated in FIG. 6 and described below is not intended to be limiting.

At operation 602, a request from the user device 102 to establish a session between the user device 102 and a network service 110 may be obtained. Operation 602 may be performed by a session module that is the same as or similar to session module 206, in accordance with one or more implementations.

At operation 604, one or more session keys associated with the session and associated with a container 108 at the user device 102 may be provided to the user device 102 responsive to the session request. As indicated, the container 108 may be configured to effectuate storage, access, or a combination thereof of data at the user device 102 based on the session keys. Operation 604 may be performed by a session module that is the same as or similar to session module 206, in accordance with one or more implementations.

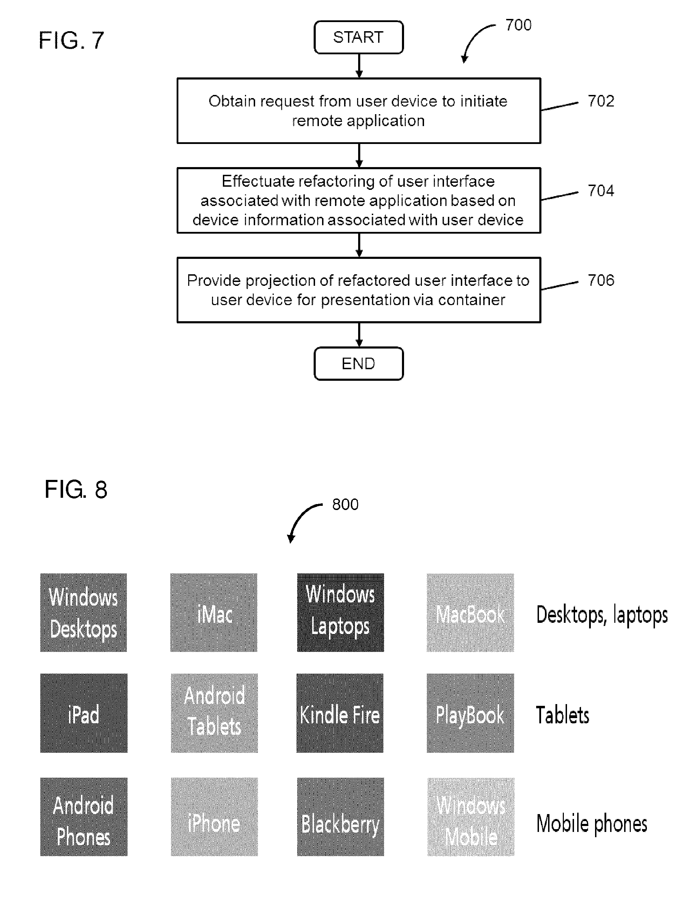

FIG. 7 is a flowchart of a process for providing a projection of a refactored user interface of a remote application to a user device, in accordance with one or more embodiments. The operations of process 700 presented below are intended to be illustrative. In some embodiments, process 700 may be accomplished with one or more additional operations not described, and/or without one or more of the operations discussed. Additionally, the order in which the operations of process 700 are illustrated in FIG. 7 and described below is not intended to be limiting.

At operation 702, a request to initiate at least one of the remote applications may be obtained from the user device 102. Operation 702 may be performed by an application manager module that is the same as or similar to application manager module 210, in accordance with one or more implementations.

At operation 704, a refactoring of a user interface associated with the at least one remote application may be effectuated based on device information associated with the user device 102. Operation 704 may be performed by an integration module that is the same as or similar to integration module 212, in accordance with one or more implementations.

At operation 706, a projection of the refactored user interface may be provided to the user device 102 such that the projection is presented via the container 108. Operation 706 may be performed by an integration module that is the same as or similar to integration module 212, in accordance with one or more implementations.

With respect to FIGS. 3, 4, 5, 6, and 7, in various embodiments, processes 300, 400, 500, 600, and/or 700 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of processes 300, 400, 500, 600, and/or 700 in response to instructions stored electronically on an electronic storage medium. The one or more processing devices may include one or more devices configured through hardware, firmware, and/or software to be specifically designed for execution of one or more of the operations of processes 300, 400, 500, 600, and/or 700.

FIG. 8 is a diagram of various types of user devices at which container-based management may be implemented, in accordance with one or more embodiments. As depicted, the user device types 800 may include a number of different form factors, operating systems, hardware/software capabilities, etc. User devices 102 that may work in conjunction with the container-based management platform 104 and/or in conjunction with network services 110 having the container-based management platform 104 may include desktops and laptops (e.g., Windows Desktops, iMac, Windows Laptops, MacBook, etc.), tablets (e.g., iPad, Android Tablets, Kindle Fire, PlayBook, etc.), mobile phones (e.g., Android Phones, iPhone, Blackberry, etc.), and/or user devices of other device types. It is noted that user devices 102 may include one or more versions of each of these user device types 800, for instance, since multiple versions of each device type 800 are simultaneously in use by customers, employees, etc.

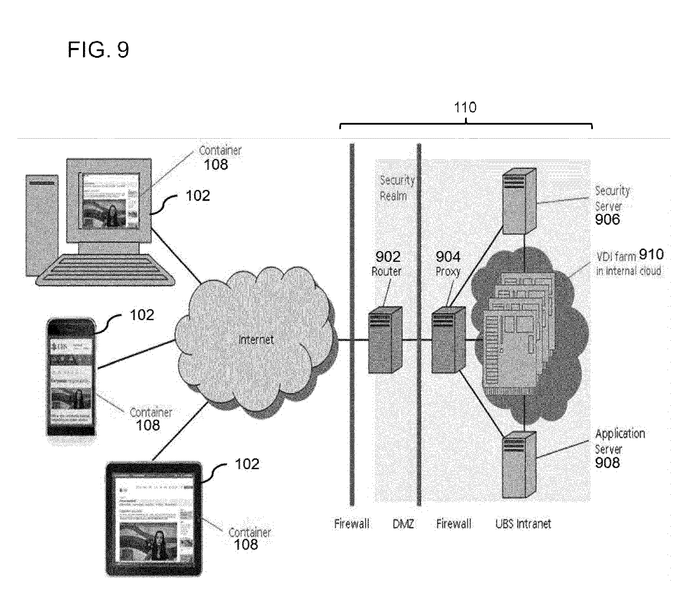

FIG. 9 is a diagram of additional components of a system for facilitating container-based management at a user device, in accordance with one or more embodiments. As shown, a container 108 may be hosted at each of the user devices 102 (e.g., desktop, mobile phone, tablet, etc.), and the user devices 102 may interact with components of one or more network services 110. The components of the network services 110 may include one or more routers 902, proxy servers 904, security servers 906, application servers 908, VDIs associated with a VDI farm 910, etc.

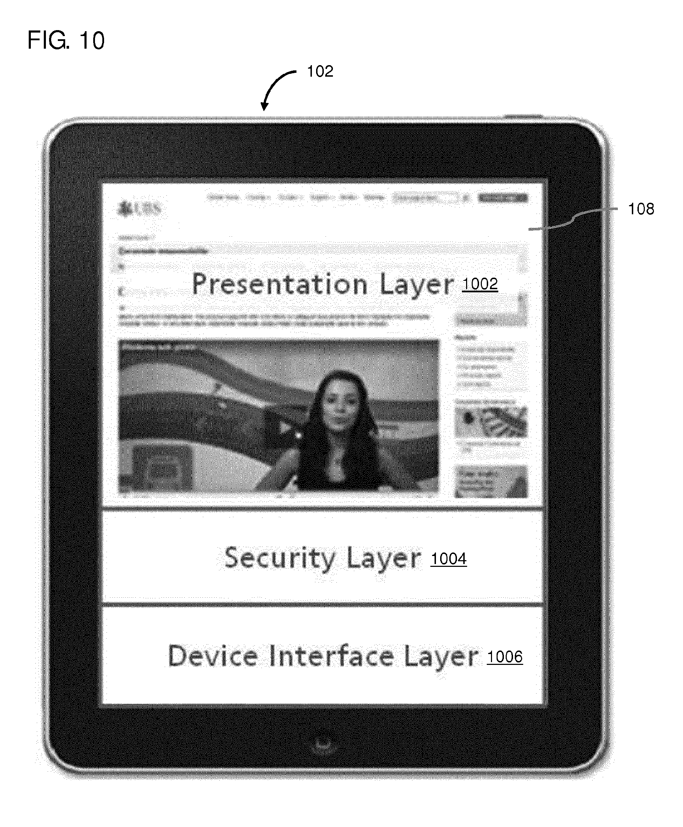

FIG. 10 is a diagram of a user device having a container for facilitating container-based management at the user device, in accordance with one or more embodiments. For example, the container 108 may be a device-specific/native application running on the user device 102. As depicted, the container 108 may include one or more layers, such as a presentation layer 1002, a security layer 1004, a device interface layer 1006, etc. The presentation layer 1002 of the container 108 may provide what the user sees "on the glass." By way of example, some parts of a graphical user interface (GUI) that the user interacts with on the user device 102 may be rendered by an application running on the device (e.g., a local application), while other parts of the GUI may be rendered by an application that is running somewhere in a cloud safely tucked in a secured network (e.g., a remote application).

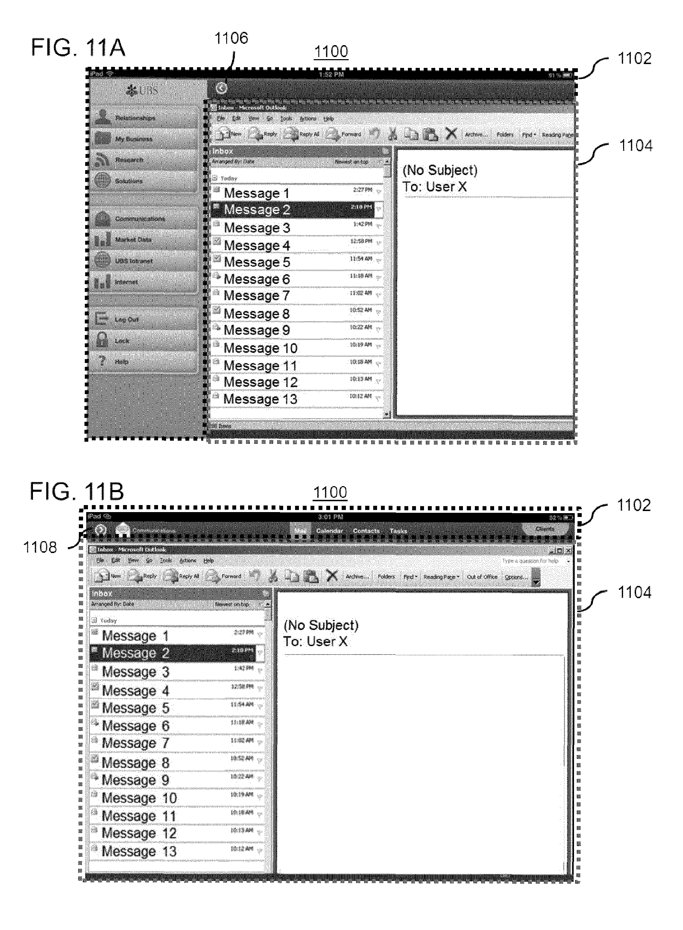

For instance, FIGS. 11 A and 11 B are diagrams of a GUI implemented based on container-based management, in accordance with one or more embodiments. As shown in FIG. 11 A, GUI 1100 may include areas 1102 and 1104. Area 1102 depicts a menu structure that appears when the user needs to make a selection and may be rendered by a local application operating within container 108 (the local application may be referred to as a container application). Area 1104 depicts a projection of a user interface of a remote application such that a video and/or image stream of the user interface is presented within area 1104 (e.g., the remote application may be referred to as a projected application). As indicated, the user interface of the remote application may have been refactored for the user device 102 at one or more VDIs on the network service 110, and the projection may be of the refactored user interface.

As illustrated by FIGS. 11 A and 11 B, the areas 1102 and 1104 dedicated to the container application or the projected application may be dynamically allocated by the container 108. For example, the user may click or tap on the left-arrow 1106 on GUI 1100 of FIG. 11 A to cause a portion of area 1102 to retract into the left margin, resulting in the GUI 1100 of FIG. 11 B where the projected application (e.g., a remote email application) takes up a larger portion of the GUI1100. The user may also click or tap on the right-arrow 1108 on GUI 1100 of FIG. 11 B to causethe retracted portion of area 1102 to reappear and present the user with GUI 1100 of FIG. 11 A. Moreover, as shown, the container application and the projection co-exist in the same container view in the form of the GUI 1100. In this way, the GUI 1100 may be transparent to the user as to whether the applications are local or remote to the device, since the look-and-feel, the interactions, etc., that the user experiences may not be negatively affected based on whether the applications are local or remote.

As shown, the container 108 utilizes the GUI 1100 to provide access to information in at least two ways that maintains confidentiality of information accessible by the user device 102: (1) via local applications that run on the user device 102 within the container 108 (e.g., as a container application); and (2) via projections of user interfaces of remote applications that run on a secure virtual machine at the network service 110 (e.g., as a projected application). In the case of a container application, the application may be protected by a layer of security by running within the container 108. The container application may be integrated into the authentication and authorization systems of the network service 110 using well-understood mechanisms. In some embodiments, the container application may utilize session keys associated with a session (e.g., between the user device 102 and the network service 110) and with the container 108 to store data on the user device 102 and/or to access stored data at the user device 102.

In the case of a projected application, the projection (e.g., a video stream, an image stream, etc.) of the application is transmitted to the user device 102. As such, the pixels of the projection disappear when the user device 102 is turned off and no substantive information is left on the user device 102. For example, any information that may be left on the user device 102 may exist only as image pixels, making the information more resistant, for instance, to hacking by viruses, malware, etc. In addition, because the projected applications are remotely installed at one or more VDIs of the network service 110, other advantages include: reduced setup costs associated with installation of applications on the user device 102; increased number of applications that can be used at the user device 102 (e.g., since the applications run at the network service 110, the applications available to the user device 102 is not limited by the device type of the user device 102); easier upgrades since the upgrades occur on uniform virtual machines, as opposed to dissimilar device types; and/or other benefits.

The security layer 1004 of the container 108 may provide the secure connectivity between the user device 102 and the back-end systems (e.g., routers, servers, etc., of the various network services 110). The security layer may also handle various security-related tasks such as interacting with back-end security systems to enable authentication and authorization of the user. Thus, the security layer in conjunction with components of the container-based management platform 104 may provide a secure environment for data even when the user device 102 utilizes unsecured networks to reach the network services 110 (e.g., implemented with container-based management) and when the user device 102 is used by users in unprotected environments.

The device interface layer 1006 of the container 108 may enable an application associated with the container 108 to interact with device-specific hardware. For example, with respect to FIG. 11B, if a user taps on a message in the message list of area 1104, the container 108 may convert the user action into a control sequence to cause the remote email application running at the network service to display the appropriate message. As another example, the container 108 may enable a local teleconferencing application running (within the container 108) on the user device 102 to interface with a camera, microphone, and speakers of the user device 102.

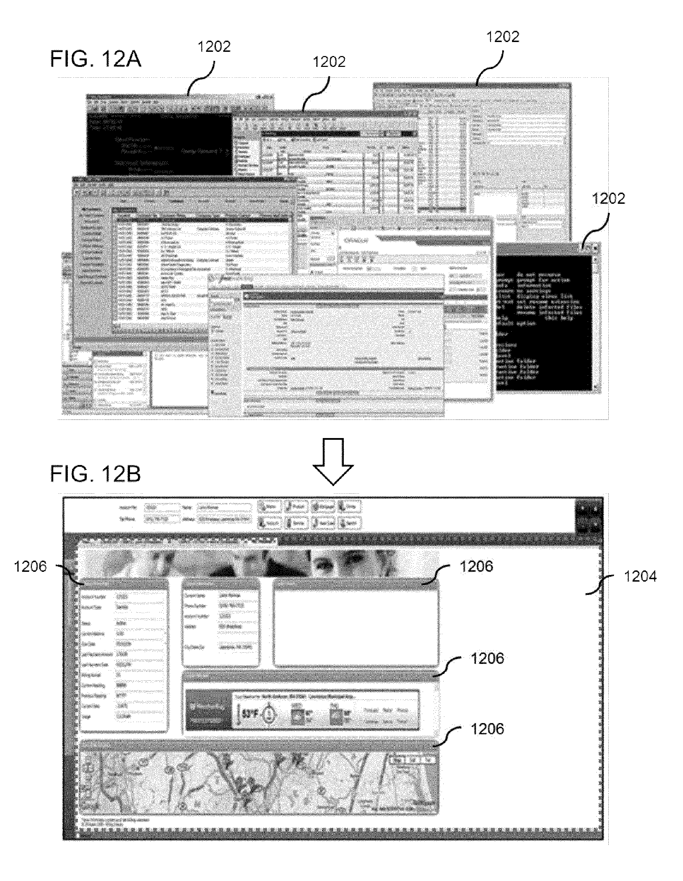

FIGS. 12A and 12B are diagrams illustrating refactoring of user interfaces at a network service and projection of the refactored user interfaces at a user device, in accordance with one or more embodiments. By way of example, FIG. 12A illustrates a plurality of default user interfaces 1202 of remote applications that may run on one or more VDIs at a network service 110. As discussed, the user interfaces may be refactored at the network service 110 based on device information associated with the user device 102. In one scenario, for instance, the container 108 may provide device information corresponding to the user device type of the user device 102 (e.g., form factor, operating system, etc.) during setup of a session between the container 108 of the user device 102 and a VDI of the network service 110. The VDI may utilize the device information to refactor footprints, look-and-feel, etc., of user interfaces of its applications so that the projection of the user interfaces served to the container 108 is customized for the user device 102 (e.g., suitable for the form factor, the look-and-feel of the operating system, etc., of the user device 102). For example, FIG. 12B illustrates an area 1204 that includes sub-areas 1206 where each of the sub-areas 1206 may represent refactored versions of the user interfaces 1202 that are projected as a video stream, an image stream, etc., to the container 108 from the network service 110.

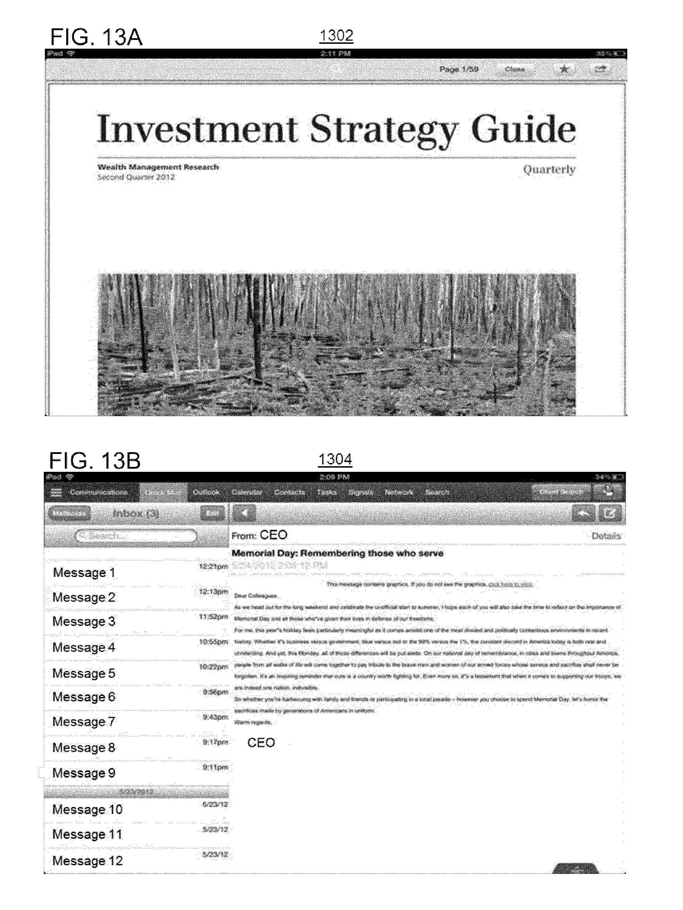

FIGS. 13A and 13B are diagrams illustrating container applications, in accordance with one or more embodiments. For example, FIG. 13A depicts a device-native PDF viewer 1302 running as a container application operating within container 108. As indicated, the native PDF viewer may be configured to work with the container 108 to store and access data. In one use case, a PDF file may be stored in a temporary storage area associated with the container 108. The stored PDF file may, for instance, be stored as an encrypted file that was encrypted using a session key associated with a session (e.g., between the container 108 and a VDI on the network service 110) and the container 108. As such, the PDF viewer may interact with the container 108 to decrypt the stored PDF file using the session key to render the PDF file on the user device 102. As mentioned, in some embodiments, the session key may be deleted from the user device 102 when the session between the container 108 and the VDI is terminated to prevent unauthorized access of information at the user device 102.

FIG. 13B depicts a device-native email reader 1304 running as a container application operating within container 108. In one scenario, a user may attempt to open an attachment in one of the messages shown by email reader 1304 during a session between container 108 and a VDI of the network service 110. If, for instance, there is a container application available within the container 108 at the user device 102 to open the attachment, the email reader may invoke that container application to open the attachment. For example, if the attachment is a PDF file, the PDF file may be downloaded to the user device 102 (e.g., stored using encryption based on session keys associated with the session), and the PDF viewer 1302 may access the PDF file to present the PDF file to the user (e.g., accessed using decryption based on the session keys).

On the other hand, if there is no container application available within the container 108 to open the attachment, the email reader 1304 may transfer control to the VDI to determine a remote application on the VDI to transparently open and display the attachment to the user as a projection (e.g., by providing a video stream, an image stream, etc., of a refactored user interface of the remote application to the user device 102). In some scenarios, an attachment may be converted by a remote application on the VDI to a format that a container application on the user device 102 can open. For example, if the only document viewer operating within the container 108 is the PDF viewer 1302, and the attachment is a Microsoft Word document, the VDI may convert the Microsoft Word document into a PDF file and provide the PDF file to the container 108 for rendering by the PDF viewer 1302.

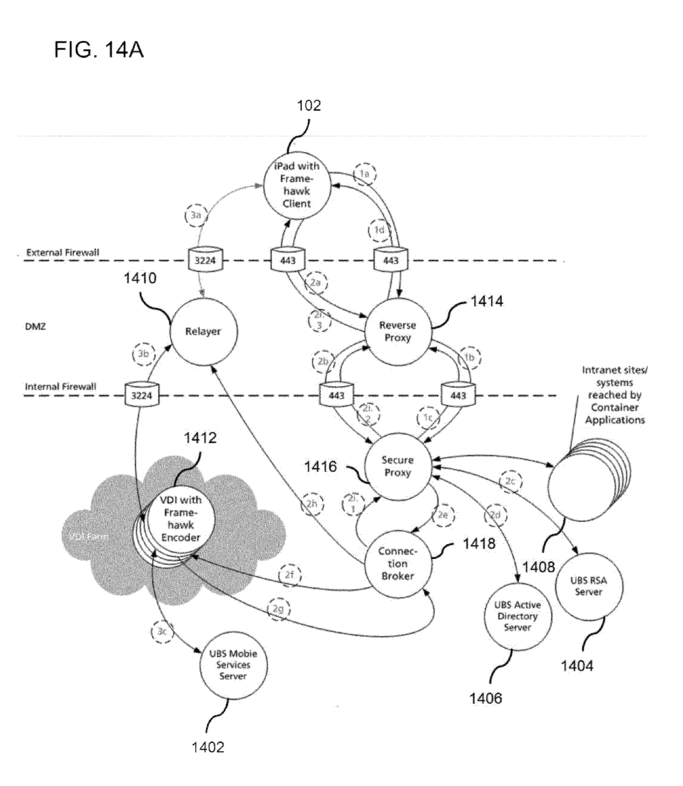

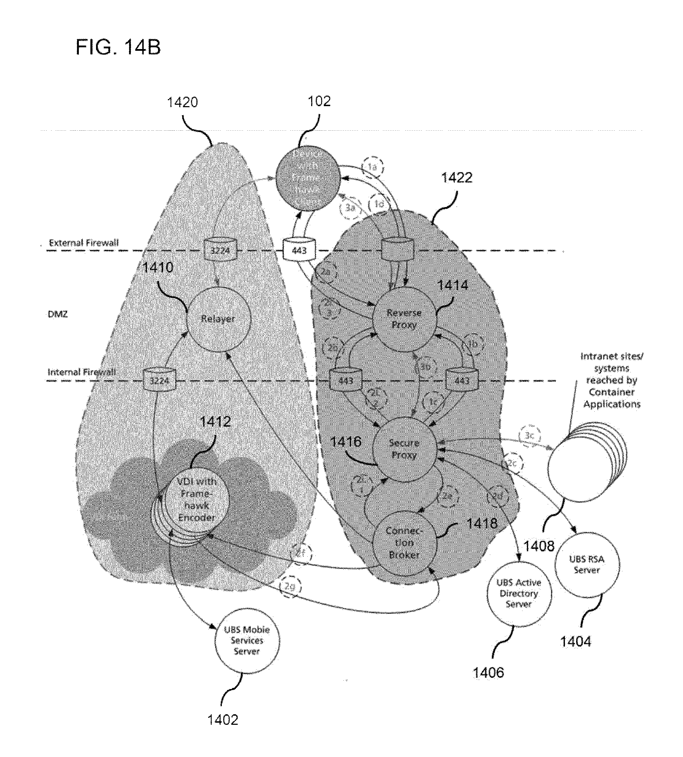

FIGS. 14A and 14B illustrate another diagram of components of a system for facilitating container-based management at a user device, in accordance with one or more embodiments. As shown in FIGS. 14A and 14B, user device 102, mobile services server 1402, RSA server 1404, active directory server 1406, and intranet systems 1408 may be pre-existing components that are leveraged by the system 100 for facilitating container-based management. Other components such as relayer 1410, VDIs 1412, reverse proxy 1414, secure proxy 1416, connection broker 1418, etc., may represent components that are created to facilitate container-based management. As depicted, some of the components run within a DMZ (e.g., a perimeter network), while other components run in the core network of the network service 110.

For illustrative purposes only, with respect to FIG. 14A, tables 1, 2, and 3 below demonstrates information flow between the user device 102 and the other components of the system 100 (or components of the network service 110) for facilitating container-based management:

**Table 1**

| **Step** | **Initial Connection Request Without Authentication Data** |
|---|---|
| 1a | User device 102 (e.g., via container 108) may establish a HTTPS connection via port 443 to reverse proxy 1414 in the DMZ using a Secure Sockets Layer (SSL) certificate. However, since the user has not logged in yet, there may be no authentication token in the submission. |
| 1b | The reverse proxy 1414 may forward the request (e.g., as it does any other request from user device 102) to the secure proxy 1416 as an HTTPS request via port 443. |
| 1c | Secure proxy 1416 may examine the request and may not find an authentication token or authentication information in the request. Secure proxy 1416 may generate a webpage that prompts the device user to enter the required information that allows two-factor authentication. Information requested may include: user name, password, RSA pin + token value, etc. Secure proxy 1416 may send request via HTTPS (port 443) to reverse proxy 1414. |
| 1d | The reverse proxy 1414 may forward the web page generated by the secure proxy 1416 to the user device 102 via HTTPS (port 443). User device 102 may display information to the user. The user may enter requested information. |

**Table 2**

| **Step** | **Second Connection Request from Device with Authentication Data and Session Setup** |
|---|---|
| 2a | The user may enter requested information. User device 102 may send HTTPS request (port 443) containing authentication information to reverse proxy 1414. |
| 2b | Reverse proxy may forward HTTPS request (port 443) from user device 102 to secure proxy 1416. |
| 2c | Secure proxy 1416 may examine the request and detect authentication credentials entered by the user. At this point, secure proxy may start to validate the user's credentials. Secure proxy 1416 may query the active directory server 1406. |
| 2d | Active directory server 1406 may respond with success/failure indicator. Secure proxy 1416 may query the RSA server 1404 via HTTPS (port 443) by sending username and RSA pin + token value. RSA Server 1404 may respond with success/failure indicator. |
| 2e | Once the validations are confirmed, the secure proxy 1416 may generate the security token and forward the request to the connection broker 1418 via HTTPS (port 443). |
| 2f | Connection broker 1418 may select the VDI 1412 to use in this session. Connection broker may send selected VDI session information (e.g., security token). |
| 2g | The VDI 1412 may generate a set of session keys and return them to the connection broker 1418. |
| 2h | Connection broker 1418 may send relayer session information that includes security token, IP address of user device 102, IP address of VDI. It is noted, however, that the session keys may not be provided to the relayer 1410 and, hence, the relayer 1410 cannot decode content that is exchanged by user device 102 and VDI 1412. |
| 2i | Connection broker 1418 may send the user device 102 (e.g., via secure proxy 1416 and reverse proxy 1414) session information that includes security token, IP address of VDI 1412, session keys, etc. At this point, the session between VDI 1412 and user device 102 has been established. |

**Table 3**

| **Step** | **Device-VDI session** |
|---|---|
| 3a, 3b | User device 102 may send to relayer 1410 packets with encrypted content but with security token in the clear using the UDP protocol via port 3224. The relayer 1410 may use the security token to determine the IP address of the recipient VDI 1412 and forward the data packet it receives from the user device 102 to the corresponding VDI 1412. Relayer 1410 may also use the security token to forward the data packet it receives from a VDI 1412 to the corresponding user device 102. It is noted that this data was provided to the relayer 1410 in step 2h above. However, the relayer 1410 cannot decode the encrypted data contents. |
| 3c | Persistent configuration information for a user device 102 may be kept in the mobility services server 1402. Such configuration information may include user selections, device-specific configuration items, etc. |

Moreover, FIG. 14B illustrates alternative steps with respect to information flow, for instance, for a container application associated with container 108. By way of example, to access the network service 110, a valid session between the user device 102 and the network service 110 may be established through the steps provided in tables 1 and 2 above. After the initial session setup, the container application may send a request to a server at the network service 110 that goes through the reverse proxy 1414 (e.g., alternative step 3a). The reverse proxy 1414 may forward the request to the secure proxy 1416 (e.g., alternative step 3b). The secure proxy may determine that the request contains a valid security token and may forward the request to the designated server (e.g., alternative step 3c). One or more applications at the server may respond with one or more packets.

FIG. 14B also illustrates connection management area 1420 and VDI provider area 1422. In some embodiments, components in connection management area 1420 may generally support authentication/authorization, container applications, etc., and components in VDI provider area 1422 may generally support projected applications. For example, the components of the connection management area 1420 may manage the lifecycle of connections (e.g., communication sessions) between user devices 102 and internal systems of network services 110. Functions that are performed by components of the connection management area 1420 may include: authenticating users during initial connection, managing and setting up certificates, session keys, allocating VDIs, etc.; providing access to various non-VDI systems associated with the network services 110; etc. Reverse proxy 1414 may, for instance, provide secure connectivity between the user device 102 and the secure proxy 1416. In some embodiments, the reverse proxy 1414 may connect only to the secure proxy in the core network. The secure proxy may initial authentication and ongoing verification of the session security token as well as connectivity to various network entities. The connection broker 1418 may set up the connection (or session) between the user device 102 and the VDI 1412 assigned to the user device 102.

As another example, the components of the VDI provider area 1422 may provide services for projected applications after the session between the user device 102 and a VDI 1412 has been set up. Relayer 1410 may, for instance, act as an intermediary between the user device 102 and the VDI 1412 to enable the user device 102 and the VDI 1412 to communication with each other. Functions of the relayer 1410 may include security and scalability by providing routing to a particular VDI 1412 in a particular VDI farm.

In the preceding description, the present disclosure is described with reference to embodiments thereof. It will, however, be evident that various modifications and changes may be made thereto without departing from the broader spirit and scope of the present disclosure, as set forth in the claims. The specification and drawings are, accordingly, to be regarded as illustrative and not as restrictive. It is understood that the present disclosure is capable of using various other combinations and embodiments and is capable of any changes or modifications within the scope of the inventive concept as expressed herein.

Embodiments of the present invention have been described with particular reference to the examples illustrated. However, it will be appreciated that variations and modifications may be made to the examples described within the scope of the present invention.

## Claims

1. A method for facilitating container-based management at a user device, the method comprising:
providing a request to a network service to establish a session between the user device and the network service;
obtaining, from the network service, one or more session keys associated with the session and associated with a container at the user device responsive to the session request; and
effectuating, via the container at the user device, storage, access, or a combination thereof of data at the user device based on the session keys.

2. A method according to claim 1, further comprising effectuating deletion of the session keys responsive to discontinuation of the session.

3. A method according to claim 1 or 2, wherein the container is associated with one or more local applications operating on the user device, one or more remote applications operating on a virtual desktop instance of the network service, or a combination thereof, and wherein the local applications, the remote applications, or a combination thereof are configured to effectuate storage, access, or a combination thereof of the data at the user device via the container using the session keys.

4. A method according to claim 1 or 2, further comprising:
providing a request to the network service to initiate at least one of the remote applications;
obtaining a projection of a refactored user interface associated with the at least one remote application, the user interface being refactored at the network service based on device information associated with the user device; and
providing presentation of the projection via the container.

5. A method according to claims 3 or 4, further comprising effectuating communication between the local applications, the remote applications, or a combination thereof via the container.

6. A method according to claim 5, further comprising:
obtaining a first set of context information, event information, or a combination thereof associated with at least one of the local applications via the container;
obtaining a second set of context information, event information, or a combination thereof associated with at least one of the remote applications via the container; and
effectuating communication between the at least one local application and the at least one remote application based on the first set, the second set, or a combination thereof.

7. A method according to any of claims 1 to 6, further comprising:
effectuating encryption of the data to be stored at the user device responsive to initiation of the storage of the data such that the stored data is encrypted using the session keys; and
effectuating decryption of the encrypted data stored at the user device using the session keys responsive to initiation of the access of the stored data.

8. Apparatus for facilitating container-based management at a user device, the apparatus comprising:
at least one processor; and
at least one memory that includes computer program code for one or more programs, the at least one memory and the computer program code configured to, with the at least one processor, cause the apparatus to perform at least the following:
provide a request to a network service to establish a session between the user device and the network service;
obtain, from the network service, one or more session keys associated with the session and associated with a container at the user device responsive to the session request; and
effectuate, via the container at the user device, storage, access, or a combination thereof of data at the user device using the session keys.

9. Apparatus according to claim 8, wherein the apparatus is further caused to effectuate deletion of the session keys responsive to discontinuation of the session.

10. Apparatus in claim 8 or 9, wherein the container is associated with one or more local applications operating on the user device, one or more remote applications operating on a virtual desktop instance of the network service, or a combination thereof, and wherein the local applications, the remote applications, or a combination thereof are configured to effectuate storage, access, or a combination thereof of the data at the user device via the container using the session keys.

11. Apparatus according to claim 10, wherein the apparatus is further caused to:
provide a request to the network service to initiate at least one of the remote applications;
obtain a projection of a refactored user interface associated with the at least one remote application, the user interface being refactored at the network service based on device information associated with the user device; and
provide presentation of the projection via the container.

12. Apparatus according to claim 11, wherein the projection is a video stream, an image stream, or a combination thereof.

13. Apparatus according to any of claims 10 to 12, wherein the apparatus is further caused to effectuate communication between the local applications, the remote applications, or a combination thereof via the container.

14. Apparatus according to claim 13, wherein the apparatus is further caused to:
obtain a first set of context information, event information, or a combination thereof associated with at least one of the local applications via the container;
obtain a second set of context information, event information, or a combination thereof associated with at least one of the remote applications via the container; and
effectuate communication between the at least one local application and the at least one remote application based on the first set, the second set, or a combination thereof.

15. A method for facilitating container-based management at a user device, the method comprising:
obtaining a request from the user device to establish a session between the user device and a network service; and
providing, to the user device, one or more session keys associated with the session and associated with a container at the user device responsive to the session request, wherein the container is configured to effectuate storage, access, or a combination thereof of data at the user device based on the session keys.

16. A method according to claim 15, wherein the session keys are deleted responsive to discontinuation of the session.

17. A method according to claim 15 or 16, wherein the container is associated with one or more local applications operating on the user device, one or more remote applications operating on a virtual desktop instance of the network service, or a combination thereof, and wherein the local applications, the remote applications, or a combination thereof are configured to effectuate storage, access, or a combination thereof of the data at the user device via the container using the session keys.

18. A method according to claim 17, further comprising:
obtaining a request from the user device to initiate at least one of the remote applications;
effectuating refactoring of a user interface associated with the at least one remote application based on device information associated with the user device; and
providing a projection of the refactored user interface to the user device such that the projection is presented via the container.

19. A method according to claim 4 or 18, wherein the projection is a video stream, an image stream, or a combination thereof.
